(19) Europäisches Patentamt
European Patent Office
Office européen des brevets

(11) **EP 4 729 568 A1**

(12) **EUROPEAN PATENT APPLICATION**
published in accordance with Art. 153(4) EPC

(43) Date of publication:
**22.04.2026 Bulletin 2026/17**

(21) Application number: **24823413.0**

(22) Date of filing: **12.06.2024**

(51) International Patent Classification (IPC):
*C08J 5/18* (2006.01)   *B32B 5/04* (2006.01)
*B32B 25/14* (2006.01)   *C08L 23/00* (2006.01)
*C08L 25/02* (2006.01)   *C08L 53/02* (2006.01)
*C08L 91/00* (2006.01)

(52) Cooperative Patent Classification (CPC):
**B32B 5/04; B32B 25/14; C08J 5/18; C08L 23/00;
C08L 25/02; C08L 53/02; C08L 91/00**

(86) International application number:
**PCT/JP2024/021354**

(87) International publication number:
**WO 2024/257798 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.06.2023 JP 2023099185**

(71) Applicant: **KURARAY PLASTICS CO., LTD.
Osaka-shi, Osaka 530-8611 (JP)**

(72) Inventor: **MIYAMOTO, Takehiro
Fuwa-gun, Gifu 503-2122 (JP)**

(74) Representative: **Müller-Boré & Partner
Patentanwälte PartG mbB
Friedenheimer Brücke 21
80639 München (DE)**

(54) **STRETCHABLE SHEET AND LAMINATE**

(57)    The present invention relates to an elastic sheet formed with a resin composition comprising:
a copolymer (a) that is a block copolymer comprising: a polymer block A mainly comprising a vinyl aromatic compound; and a polymer block B mainly comprising a conjugated diene compound; or that is a hydrogenated product of the block copolymer; and

with respect to 100 parts by mass of the copolymer (a), 50 to 200 parts by mass of a hydrocarbon softener (b); and

5 to 20 parts by mass of a styrene-containing oligomer (c),

the elastic sheet having a thickness of not more than 200 μm.

EP 4 729 568 A1

**Description**

TECHNICAL FIELD

The present invention relates to an elastic sheet and a laminated body.

BACKGROUND ART

Clothing, household goods, hygiene products, and the like have parts required to have elasticity. As the members to be used for these parts, various elastic members, including thermoplastic synthetic resins such as polyurethane resins, polystyrene resins, and vinyl resins, as well as natural resins, have so far been studied.

For example, Patent Document 1 discloses, as an elastic material having elasticity and flexibility, an elastic material comprising a specific block copolymer and having controlled physical property values regarding the residual strain and the like. Patent Document 2 discloses an elastic member composed of a thermoplastic polymer composition comprising two kinds of specific block copolymers. Patent document 3 discloses a porous sheet comprising a specific block copolymer and a hydrocarbon softener.

PRIOR ART DOCUMENTS

PATENT DOCUMENTS

Patent Document 1: JP 2002-363376 A
Patent Document 2: JP 2006-89546 A
Patent Document 3: JP 6931363 B

SUMMARY OF THE INVENTION

PROBLEMS TO BE SOLVED BY THE INVENTION

The present inventors studied to discover that the elastic portion of a conventionally used elastic sheet becomes unrecoverable as the sheet is repeatedly used, and that the sheet may tend to suffer from sagging as a result. Furthermore, a conventionally used elastic sheet formed from a polyurethane resin, when used as clothing or the like, may cause excessive tightness, which may adversely affect comfort of the clothing.

Thus, an object of the present invention is to provide an elastic sheet having an elastic portion with reduced tightness, which elastic sheet does not suffer from sagging even after repeated use.

SOLUTIONS TO THE PROBLEMS

In order to solve the above problem, the present inventors intensively studied the materials, physical property values, and the like of elastic sheets to discover that the problem can be solved with an elastic sheet formed from a specific resin composition and having a specific thickness, thereby completing the present invention. Specifically, the present invention includes the following aspects

[1] An elastic sheet formed with a resin composition comprising:

a copolymer (a) that is a block copolymer comprising: a polymer block A mainly comprising a vinyl aromatic compound; and a polymer block B mainly comprising a conjugated diene compound; or that is a hydrogenated product of the block copolymer; and
with respect to 100 parts by mass of the copolymer (a),
50 to 200 parts by mass of a hydrocarbon softener (b); and
5 to 20 parts by mass of a styrene-containing oligomer (c),
the elastic sheet having a thickness of not more than 200 $\mu$m.

[2] The elastic sheet according to [1], whose tension at 100% elongation is not more than 1.5 N/5 mm.
[3] The elastic sheet according to [1] or [2], wherein the total amount of the copolymer (a), the hydrocarbon softener (b), and the styrene-containing oligomer (c) is not less than 85% by mass with respect to the total amount of the resin composition.

[4] The elastic sheet according to any one of [1] to [3], wherein the flow initiation temperature of the resin composition is not more than 200°C.

[5] The elastic sheet according to any one of [1] to [4], capable of thermal fusion bonding at a temperature of not more than 170°C.

[6] The elastic sheet according to any one of [1] to [5], wherein the weight average molecular weight of the copolymer (a) is 50,000 to 140,000.

[7] The elastic sheet according to any of [1] to [6], wherein the copolymer (a) comprises a constituent unit derived from a styrene-based monomer, and wherein the amount of the constituent unit derived from the styrene-based monomer is not less than 15% by mass with respect to the total amount of constituting units of the copolymer (a).

[8] The elastic sheet according to any one of [1] to [7], wherein the weight average molecular weight of the styrene-containing oligomer (c) is 1,000 to 6,000.

[9] The elastic sheet according to any one of [1] to [8], wherein the resin composition further comprises 1 to 50 parts by mass of a polyolefin-based resin (d) with respect to 100 parts by mass of the copolymer (a).

[10] The elastic sheet according to [9], wherein the polyolefin-based resin (d) has a melt flow rate of 0.1 to 100 g/10 min.

[11] The elastic sheet according to [9] or [10], wherein the polyolefin-based resin (d) is a copolymer of ethylene and at least one $C_3$-$C_{12}$ $\alpha$-olefin.

[12] The elastic sheet according to any one of [1] to [11], wherein the resin composition comprises an acrylic block copolymer in an amount of not less than 0 parts by mass and less than 20 parts by mass with respect to 100 parts by mass of the copolymer (a).

[13] The elastic sheet according to any one of [1] to [12], wherein the recovery rate of the length of the elastic sheet after repeating 100% elongation three times at room temperature is not less than 99.0%.

[14] The elastic sheet according to any one of [1] to [13], wherein the recovery rate of the length of the elastic sheet after holding the elastic sheet in a state of 50% elongation at 35°C for 2 hours is not less than 87.0%.

[15] The elastic sheet according to any one of [1] to [14], which is an elastic tape.

[16] A laminated body at least comprising: an elastic base material layer (1); and a resin layer (2) adjacent to the elastic base material layer; wherein the resin layer (2) is a layer formed from the elastic sheet according to any one of [1] to [15].

[17] The laminated body according to [16], wherein the elastic base material layer (1) is adjacent to both sides of the resin layer (2).

EFFECTS OF THE INVENTION

According to the present invention, an elastic sheet having an elastic portion with reduced tightness, wherein the elastic sheet does not suffer from sagging even after repeated use, can be provided.

DETAILED DESCRIPTION

Embodiments of the present invention are described below in detail. The scope of the present invention is not limited to the embodiments described herein, and various modifications may be made without departing from the spirit of the invention.

The elastic sheet of the present invention is a sheet formed with a resin composition comprising:

a copolymer (a) that is a block copolymer comprising: a polymer block A mainly comprising a vinyl aromatic compound; and a polymer block B mainly comprising a conjugated diene compound; or that is a hydrogenated product of the block copolymer; and
with respect to 100 parts by mass of the copolymer (a),
50 to 200 parts by mass of a hydrocarbon softener (b); and
5 to 20 parts by mass of a styrene-containing oligomer (c),
the sheet having a thickness of not more than 200 $\mu$m.

[Resin Composition]

(Copolymer (a))

The resin composition forming the elastic sheet of the present invention comprises: a copolymer (a) that is a block copolymer comprising: a polymer block A mainly comprising a vinyl aromatic compound; and a polymer block B mainly comprising a conjugated diene compound; or that is a hydrogenated product of the block copolymer.

The polymer block A is a polymer block mainly comprising a vinyl aromatic compound. Examples of the vinyl aromatic compound include styrene, $\alpha$-methylstyrene, 2-methylstyrene, 3-methylstyrene, 4-methylstyrene, 4-propylstyrene, 4-t-butylstyrene, 4-cyclohexylstyrene, 4-dodecylstyrene, 2,4-dimethylstyrene, 2,4 diisopropylstyrene, 2,4,6-trimethylstyrene, 2-ethyl-4-benzylstyrene, 4-(phenylbutyl)styrene, 1-vinylnaphthalene, 2-vinylnaphthalene, vinylanthracene, N,N-diethyl-4-aminoethylstyrene, vinylpyridine, 4-methoxystyrene, monochlorostyrene, dichlorostyrene, and divinylbenzene. These vinyl aromatic compounds may be used individually, or two or more of these may be used in combination. Among these, styrene, $\alpha$-methylstyrene, and 4-methylstyrene are preferred from the viewpoint of reducing the stress at 100% elongation and improving the elasticity. Styrene is more preferred.

In the present description, "mainly comprising a vinyl aromatic compound" means that the amount of constituent units derived from the vinyl aromatic compound in the polymer block A is larger than 50% by mass with respect to the total amount of constituting units of the polymer block A. The amount of constituent units derived from the vinyl aromatic compound is preferably not less than 60% by mass, more preferably not less than 70% by mass, still more preferably not less than 80% by mass, further preferably not less than 90% by mass, still further preferably not less than 95% by mass, particularly preferably 100% by mass with respect to the total amount of constituting units of the polymer block A.

From the viewpoint of reducing the stress at 100% elongation and improving the elasticity, the amount of constituent units derived from the vinyl aromatic compound is preferably 5 to 75% by mass, more preferably 10 to 50% by mass with respect to the total amount of constituting units of the copolymer (a).

The polymer block A may comprise a constituent unit derived from a monomer other than a vinyl aromatic compound, for example, another monomer such as a monomer constituting the polymer block B described later. In this case, the content of structural units derived from monomers other than a vinyl aromatic compound in the polymer block A is less than 50% by mass, preferably not more than 40% by mass, more preferably not more than 30% by mass, further preferably not more than 20% by mass, still further preferably not more than 10% by mass, particularly preferably not more than 5% by mass.

The polymer block B is a polymer block mainly comprising a conjugated diene compound. Examples of the conjugated diene compound include butadiene, isoprene, 2,3-dimethyl-butadiene, 2-phenyl-butadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, myrcene, farnesene, and chloroprene. These conjugated diene compounds may be used individually, or two or more of these may be used in combination. Among these, from the viewpoint of reducing the stress at 100% elongation and improving the elasticity, the conjugated diene compound is preferably at least one selected from the group consisting of butadiene, isoprene, and farnesene, more preferably at least one selected from the group consisting of butadiene and isoprene.

In the present description, "mainly comprising a conjugated diene compound" means that the amount of constituent units derived from the conjugated diene compound in the polymer block B is larger than 50% by mass with respect to the total amount of constituting units of the polymer block B. The amount of constituent units derived from the conjugated diene compound is preferably not less than 60% by mass, more preferably not less than 70% by mass, still more preferably not less than 80% by mass, further preferably not less than 90% by mass, still further preferably not less than 95% by mass, particularly preferably 100% by mass with respect to the total amount of constituting units of the polymer block B. In cases where the copolymer (a) is a polymer that is hydrogenated in at least part thereof, the constituent units derived from the conjugated diene compound include a hydrogenated constituent unit derived from the conjugated diene compound.

From the viewpoint of reducing the stress at 100% elongation and improving the elasticity, the amount of constituent units derived from the conjugated diene compound is preferably 25 to 95% by mass, more preferably 50 to 90% by mass with respect to the total amount of constituting units of the copolymer (a).

The polymer block B may comprise a constituent unit derived from a monomer other than a conjugated diene compound, for example, another monomer such as a monomer constituting the polymer block A. In this case, the content of structural units derived from monomers other than a conjugated diene compound in the polymer block B is less than 50% by mass, preferably not more than 40% by mass, more preferably not more than 30% by mass, still more preferably not more than 20% by mass, further preferably not more than 10% by mass, still further preferably not more than 5% by mass.

The copolymer (a) is a block copolymer comprising a polymer block A and a polymer block B, or a hydrogenated product of the block copolymer. The copolymer (a) is preferably a hydrogenated product of a block copolymer comprising a polymer block A and a polymer block B. In cases where the copolymer (a) is a hydrogenated product, preferably not less than 50% by mole, more preferably not less than 75% by mole, still more preferably not less than 95% by mole of the carbon-carbon double bonds derived from the conjugated diene compound in the polymer block B are hydrogenated in the copolymer (a).

The copolymer (a) may comprise at least one polymer block A and at least one polymer block B. From the viewpoint of heat resistance, mechanical properties, elasticity, and the like of the elastic sheet, the copolymer (a) preferably at least comprises two or more polymer blocks A and one or more polymer blocks B. The bonding mode of the polymer block A and the polymer block B may be a linear bonding mode, a branched bonding mode, or any combination thereof. When the polymer block A is represented as A, and the polymer block B is represented as B, the bonding mode includes, for example, the triblock structure represented as A-B-A, and multiblock copolymers represented as (A-B)$_n$ or (A-B)$_n$-A (wherein n represents an integer of 2 or more). Among these, the triblock structure represented as A-B-A is preferred from the viewpoint of heat resistance, mechanical properties, elasticity, and ease of handling of the elastic sheet. In cases where the copolymer (a) comprises two or more polymer blocks A, the polymer blocks A may be the same as or different from each other. The same applies to the polymer block B.

From the viewpoint of the film-forming property, and of heat resistance, mechanical properties, elasticity, ease of handling, and the like of the elastic sheet, the weight average molecular weight of the copolymer (a) is preferably not less than 50,000, more preferably not less than 52,000. From the viewpoint of elasticity, for example, from the viewpoint of the recovery performance after repeated operation of elongation and contraction, and/or after the sheet is kept in an elongated/contracted state for a certain length of time, and from the viewpoint of reducing the thickness of the sheet, the weight average molecular weight is preferably not more than 140,000, more preferably not more than 120,000, still more preferably not more than 100,000. The weight average molecular weight of the copolymer (a) is preferably 50,000 to 140,000, more preferably 50,000 to 120,000, still more preferably 52,000 to 100,000. The weight average molecular weight herein means, for example, the weight average molecular weight in terms of the standard polystyrene as determined by gel permeation chromatography (GPC) measurement under the following conditions.

Measurement conditions:

    GPC: LC Solution (manufactured by SHIMADZU)
    Detector: Differential refractometer RID-10A (manufactured by SHIMADZU)
    Columns: Two TSK gel G4000Hx1 columns in series (manufactured by TOSOH)
    Guard column: TSK guard column Hxl-L (manufactured by TOSOH)
    Solvent: Tetrahydrofuran
    Temperature: 40°C
    Flow rate: 1 ml/min
    Concentration: 2 mg/ml

In one preferred embodiment of the present invention, the copolymer (a) preferably comprises a constituent unit derived from a styrene-based monomer. In this embodiment, from the viewpoint of improving the elasticity, the content of styrene-based monomers in the copolymer (a) is preferably not less than 15% by mass, more preferably not less than 20% by mass, still more preferably not less than 25% by mass with respect to the total amount of the copolymer (a). Further, from the viewpoint of the flexibility, the content is preferably not more than 50% by mass, more preferably not more than 40% by mass, still more preferably not more than 35% by mass. From the viewpoints described above, the content of styrene-based monomers in the copolymer (a) is preferably 15 to 50% by mass, more preferably 20 to 40% by mass, still more preferably 25 to 35% by mass. The content of constituent units derived from styrene-based monomers (also referred to as styrene content) in the copolymer (a) may be calculated from the monomer ratio in the production of the copolymer (a), or may be calculated by $^1$H-NMR analysis or the like.

From the viewpoint of reducing the stress at 100% elongation, the hardness of the copolymer (a) is preferably 20A to 50A, more preferably 25A to 45A, still more preferably 30A to 40A. The hardness can be measured with a Type-A durometer based on the JIS K 6253-1997 durometer hardness test.

From the viewpoint of improving the elasticity, the content of the copolymer (a) contained in the resin composition is preferably not less than 20% by mass, more preferably not less than 25% by mass, still more preferably not less than 30% by mass with respect to the total amount of the resin composition. From the viewpoint of processability and ease of handling, the content is preferably not more than 70% by mass, more preferably not more than 60% by mass, still more preferably not more than 55% by mass. From the viewpoints described above, the content of the copolymer (a) in the resin composition is preferably 20 to 70% by mass, more preferably 25 to 60% by mass, still more preferably 30 to 55% by mass.

(Hydrocarbon Softener (b))

The resin composition forming the elastic sheet of the present invention comprises, in addition to the copolymer (a), a hydrocarbon softener (b). Examples of the hydrocarbon softener (b) include process oils such as paraffinic oils, naphthenic oils, and aromatic oils; and liquid paraffins. Among these, process oils such as paraffinic oils and naphthenic oils are preferred. These may be used individually, or two or more of these may be used in combination. The hydrocarbon softener (b) is preferably a non-aromatic hydrocarbon softener. The non-aromatic hydrocarbon softener means a softener in which the number of carbon atoms in aromatic rings accounts for preferably less than 35%, more preferably less than 30%, still more preferably less than 25% with respect to the total number of carbon atoms in the molecule.

The content of the hydrocarbon softener (b) is 50 to 200 parts by mass with respect to 100 parts by mass of the copolymer (a) contained in the resin composition. In cases where the content of the hydrocarbon softener (b) is less than 50 parts by mass, the elastic force of the resin composition may be too high, making it difficult to achieve the elasticity. In addition, the film-forming property of the resin composition may not be sufficient. On the other hand, in cases where the content is more than 200 parts by mass, the mechanical strength may not be sufficient. From the viewpoint of reducing the stress at 100% elongation, the content of the hydrocarbon softener (b) is preferably 55 to 170 parts by mass, more preferably 60 to 150 parts by mass, still more preferably 70 to 120 parts by mass with respect to 100 parts by mass of the copolymer (a) contained in the resin composition.

The kinematic viscosity of the hydrocarbon softener (b) as measured at 40°C according to JIS K 2283: 2000 is preferably 10 to 500 $mm^2/s$, more preferably 50 to 450 $mm^2/s$, still more preferably 100 to 400 $mm^2/s$.

(Styrene-Containing Oligomer (c))

The resin composition forming the elastic sheet of the present invention comprises, in addition to the copolymer (a) and the hydrocarbon softener (b), a styrene-containing oligomer (c). The styrene-containing oligomer herein means an oligomer that comprises a constituent unit derived from a styrene-based monomer, and that does not correspond to the copolymer (a). Examples of the styrene-containing oligomer (c) include polystyrene, poly-$\alpha$-methylstyrene, poly-4-methylstyrene, styrene/$\alpha$-methylstyrene copolymers, styrene/4-methylstyrene copolymers, $\alpha$-methylstyrene/4-methyl-styrene copolymers, and styrene/$\alpha$-methylstyrene/ 4-methylstyrene copolymers. One type of styrene-containing oligomer (c) may be used alone, or two or more types of styrene-containing oligomers (c) may be used in combination.

As the styrene-containing oligomer (c), a commercially available product may be used. Examples of commercially available products that can be used as styrene-containing oligomers (c) include: aromatic polymers manufactured by EASTMAN Chemical Company, such as Piccolastic A5 (polystyrene; softening point, 5°C; Mw 350), Piccolastic A-75 (polystyrene; softening point, 74°C; Mw 1300), Piccotex 75 ($\alpha$-methylstyrene/4-methylstyrene copolymer; softening point, 75°C; Mw 1100), Piccotex LC ($\alpha$-methylstyrene/4-methylstyrene copolymer; softening point, 91°C; Mw 1350), Kristalex 3070 (styrene/$\alpha$-methylstyrene copolymer; softening point, 70°C; Mw 950), Kristalex 3085 (styrene/$\alpha$-methylstyrene copolymer; softening point, 85°C; Mw 1150), Kristalex 3100 (styrene/$\alpha$-methylstyrene copolymer; softening point, 100°C; Mw 1500), Kristalex 5140 (styrene/$\alpha$-methylstyrene copolymer; softening point, 139°C; Mw 4900), Endex 155 (poly-$\alpha$-methylstyrene; softening point, 153°C; Mw 6900), and Endex 160 (poly-$\alpha$-methylstyrene; softening point, 158°C; Mw 9200); Himer ST-95 (polystyrene; softening point, 95°C; Mw 4000; manufactured by Sanyo Chemical Industries, Ltd.); YS Resin SX-100 (polystyrene; softening point, 100°C; Mw 2500; manufactured by Yasuhara Chemical Co., Ltd.); FMR-0150 (styrene/aromatic hydrocarbon copolymer; softening point, 145°C; Mw 2040; manufactured by Mitsui Chemicals, Inc.); FTR-6100 (styrene/aliphatic hydrocarbon copolymer; softening point, 95°C; Mw 1210; manufactured by Mitsui Chemicals, Inc.); FTR-6110 (styrene/aliphatic hydrocarbon copolymer; softening point, 110°C; Mw 1570; manufactured by Mitsui Chemicals, Inc.); FTR-6125 (styrene/aliphatic hydrocarbon copolymer; softening point, 125°C; Mw 1950; manufactured by Mitsui Chemicals, Inc.); FTR-7100 (styrene/$\alpha$-methylstyrene/aliphatic hydrocarbon copolymer; softening point, 100°C; Mw 1440; manufactured by Mitsui Chemicals, Inc.); FTR-0100 (poly-$\alpha$-methylstyrene; softening point, 100°C; Mw 1960; manufactured by Mitsui Chemicals, Inc.); FTR-2120 (styrene/$\alpha$-methylstyrene copolymer; softening point, 120°C; Mw 2630; manufactured by Mitsui Chemicals, Inc.); and FTR-2140 (styrene/$\alpha$-methylstyrene copolymer; softening point, 137°C; Mw 3230; manufactured by Mitsui Chemicals, Inc.).

The content of the styrene-containing oligomer (c) is 5 to 20 parts by mass with respect to 100 parts by mass of the copolymer (a) contained in the resin composition. In cases where the content of the styrene-containing oligomer (c) is less than 5 parts by mass, the styrene phase of the copolymer (a) is not reinforced, so that the elastic sheet cannot withstand long-term extension stress. On the other hand, in cases where the content is more than 20 parts by mass, the elastic sheet may not have sufficient elasticity. From the viewpoint of preventing sagging, the content of the styrene-containing oligomer (c) is preferably 5 to 18 parts by mass, more preferably 6 to 17 parts by mass, still more preferably 7 to 15 parts by mass with respect to 100 parts by mass of the copolymer (a) contained in the resin composition.

From the viewpoint of the reinforcing effect on the styrene phase of the copolymer (a), the weight average molecular weight of the styrene-containing oligomer (c) is preferably not less than 300, more preferably not less than 700, still more preferably not less than 1000, further preferably not less than 1500, further more preferably not less than 2000. From the viewpoint of the compatibility with the styrene phase of the copolymer (a), the weight average molecular weight is preferably not more than 10,000, more preferably not more than 8000, still more preferably not more than 6000, further preferably not more than 5500, further more preferably not more than 5000. Therefore, the weight average molecular weight of the styrene-containing oligomer (c) is preferably 300 to 10,000, more preferably 700 to 8000, still more preferably 1000 to 6000, further preferably 1500 to 5500, further more preferably 2000 to 5000. The weight average molecular weight of styrene-containing oligomer (c) can be determined by gel permeation chromatography, in terms of the standard polystyrene. Although the mechanism by which the styrene-containing oligomer reinforces the styrene phase of the copolymer (a) is not clear, it is thought that a styrene-containing oligomer having a specific molecular weight intermingles with the styrene phase of the copolymer (a) to increase the cohesive force of the styrene phase, resulting in the production of the reinforcing effect.

From the viewpoint of compatibility with the styrene phase of the copolymer (a), the content of constituent units derived from styrene-based monomers in the styrene-containing oligomer (c) is preferably not less than 40% by mass, more preferably not less than 50% by mass, still more preferably not less than 60% by mass with respect to the total amount of the styrene-containing oligomer (c). From the viewpoint of recoverability after the application of a long-term extension stress, the content is preferably not more than 90% by mass, more preferably not more than 80% by mass, still more preferably not more than 70% by mass. Therefore, from the viewpoints described above, the content of constituent units derived from styrene-based monomers in the styrene-containing oligomer (c) is preferably 40 to 90% by mass, more preferably 50 to 80% by mass, still more preferably 60 to 70% by mass.

The softening point of the styrene-containing oligomer (c) is not limited. From the viewpoint of ease of handling, the softening point is preferably not less than 110°C, more preferably not less than 120°C, still more preferably not less than 130°C.

The resin composition forming the elastic sheet of the present invention at least comprises the copolymer (a), the hydrocarbon softener (b), and the styrene-containing oligomer (c). From the viewpoint of improving the elasticity, the total amount of these components, with respect to the total amount of the resin composition, is preferably not less than 85% by mass, more preferably not less than 90% by mass, still more preferably not less than 95% by mass, and may be not more than 100% by mass.

(Other Components)

The resin composition forming the elastic sheet of the present invention may comprise other components in addition to the copolymer (a), the hydrocarbon softener (b), and the styrene-containing oligomer (c). Examples of the other components include a polyolefin-based resin (d); a filler (e); an antioxidant (f); other resins; lubricants; light stabilizers; processing aids; coloring agents such as pigments and dyes; flame retardants; antistatic agents; matting agents; silicone oils; anti-blocking agents; UV absorbers; mold release agents; foaming agents; antimicrobial agents; antifungal agents; and perfumes.

The polyolefin-based resin (d) is not limited as long as it is a resin prepared by polymerizing olefin monomers. From the viewpoint of the strength, moldability, chemical resistance, heat resistance, and the like of the elastic sheet, the polyolefin-based resin (d) is preferably a propylene-based polymer, an ethylene-based polymer, or a mixture thereof.

Examples of the propylene-based polymer include homo-polypropylene, and copolymers (for example, random copolymers and block copolymers) of propylene and other $\alpha$-olefins. The stereoregularity is not limited, and the polymer may be an isotactic polypropylene, a syndiotactic polypropylene, an atactic polypropylene, or the like. In particular, copolymers (for example, random copolymers and block copolymers) of propylene and other $\alpha$-olefins are preferred. Examples of the other $\alpha$-olefins include ethylene and $C_4$-$C_{20}$ $\alpha$-olefins, such as ethylene, 1-butene, 1-pentene, 1-hexene, 1-octene, and 4-methyl-1-pentene. Regarding the other $\alpha$-olefins, one type of $\alpha$-olefin may be used, or two or more types of $\alpha$-olefins may be used in combination.

Examples of the ethylene-based polymer include ethylene homopolymers such as low-density polyethylene (LDPE), medium-density polyethylene, and high-density polyethylene (HDPE); and copolymers (for example, random copolymers and block copolymers) of ethylene and other $\alpha$-olefins. Examples of the other $\alpha$-olefins include $C_3$-$C_{20}$ $\alpha$-olefins, such as propylene, 1-butene, 1-pentene, 1-hexene, 1-octene, and 4-methyl-1-pentene. Regarding the other $\alpha$-olefins, one type of $\alpha$-olefin may be used, or two or more types of $\alpha$-olefins may be used in combination. Specific examples of the ethylene-based polymer include ethylene/$\alpha$-olefin copolymers, such as ethylene/1-butene copolymers, ethylene/1-hexene copolymers, ethylene/1-heptene copolymers, ethylene/1-octene copolymers, ethylene/4-methyl-1-pentene copolymers, ethylene/1-nonene copolymers, and ethylene/1-decene copolymers.

Furthermore, in order to increase the compatibility between the copolymer (a) and the polyolefin-based resin (d), an active-group-containing olefin-based resin may be used, wherein the active-group-containing olefin-based resin is obtained by copolymerization (random copolymerization or graft copolymerization) of monomers comprising an active group such as a hydroxyl group, a carbonyl group, an amide group, and/or an ester group with the polyolefin-based resin (d).

From the viewpoint of the film-forming property, the polyolefin-based resin (d) is preferably an ethylene-based polymer, more preferably a copolymer of ethylene and at least one $C_3$-$C_{12}$ $\alpha$-olefin, still more preferably a copolymer of ethylene and at least one $C_3$-$C_6$ $\alpha$-olefin.

In cases where the resin composition comprises a polyolefin-based resin (d), its content is preferably 1 to 50 parts by mass, more preferably 2 to 40 parts by mass, still more preferably 3 to 30 parts by mass, further preferably 4 to 20 parts by mass with respect to 100 parts by mass of the copolymer (a). In cases where the content of the polyolefin-based resin (d) is within the range described above, both the film-forming property and the elastic property can be achieved, which is preferred.

From the viewpoint of the film-forming property during molding of the elastic sheet using the resin composition, the melt flow rate of the polyolefin-based resin (d) is preferably 0.1 to 100 g/10 min, more preferably 1 to 80 g/10 min, still more preferably 5 to 50 g/10 min. The melt flow rate can be measured in accordance with JIS K 7210-1: 2014 (230°C, 2.16-kg load).

From the viewpoint of the fabric adhesion property, the melting point of the polyolefin-based resin (d) is preferably 100 to 150°C, more preferably 110 to 140°C, still more preferably 120 to 130°C. The melting point can be measured by DSC.

Examples of the filler (e) include organic or inorganic fillers. Examples of the organic or inorganic fillers include scale-like inorganic fillers of clay, diatomaceous earth, silica, talc, barium sulfate, calcium carbonate, magnesium carbonate, metal oxides, mica, graphite, aluminum hydroxide, and the like. Further, granular or powdered solid fillers such as various metal powders, wood chips, glass powders, ceramic powders, and granular or powdered polymers; various other natural or artificial short fibers and long fibers (for example, straw, hair, glass fibers, metal fibers, and various other polymer fibers); and the like may be contained as the organic or inorganic fillers. From the viewpoint of ease of handling (reduction of tackiness), the content of the filler (e) in the resin composition is preferably 0 to 10% by mass, more preferably 0 to 5% by mass, still more preferably 0 to 3% by mass with respect to the total amount of the resin composition. In one embodiment of the present invention, the content of the filler (e) in the resin composition is preferably not more than 10% by mass, more preferably not more than 5% by mass, still more preferably not more than 1% by mass with respect to 100 parts by mass of the copolymer (a). The resin composition still more preferably does not comprise the filler (e).

Examples of the antioxidant (f) include hindered phenol-based antioxidants, phosphorus-based antioxidants, lactone-based antioxidants, and hydroxyl-based antioxidants. Among these, hindered phenol antioxidants are preferred. In cases where the antioxidant (f) is included, its content is preferably within the range in which coloring of the resin composition does not occur during melt-kneading. The content is preferably 0.1 to 5 parts by mass with respect to 100 parts by mass of the copolymer (a).

Examples of the other resins include a tackifying resin. Examples of the tackifying resin include rosin-based resins, terpene phenolic resins, terpene resins, aromatic hydrocarbons, modified terpene resins, aliphatic petroleum resins, alicyclic petroleum resins, aromatic petroleum resins, coumarone-indene resins, phenolic resins, and xylene resins. From the viewpoint of the film-forming property and the processability during the production of the elastic sheet, the softening point of the tackifying resin is preferably 85 to 160°C, more preferably 100 to 150°C, still more preferably 105 to 145°C.

In cases where the tackifying resin is included, its content is preferably within the range in which the mechanical properties of the resin composition are not deteriorated. The content is preferably not more than 100 parts by mass, more preferably not more than 70 parts by mass, still more preferably not more than 30 parts by mass, further preferably not more than 10 parts by mass with respect to 100 parts by mass of the copolymer (a).

Another example of the other resin is an acrylic block copolymer. The amount of the acrylic block copolymer in the resin composition of the present invention is preferably not less than 0 parts by mass and less than 20 parts by mass, more preferably 0 parts by mass to 15 parts by mass, still more preferably 0 parts by mass to 10 parts by mass, further preferably 0 parts by mass to 5 parts by mass with respect to 100 parts by mass of the copolymer (a).

From the viewpoint of the film-forming property and the processability during the production of the elastic sheet, the flow initiation temperature of the resin composition forming the elastic sheet of the present invention is preferably not more than 200°C, more preferably not more than 190°C, still more preferably not more than 180°C, further preferably not more than 170°C, further more preferably not more than 160°C, particularly preferably not more than 150°C, particularly more preferably not more than 140°C. From the viewpoint of heat resistance, the flow initiation temperature is preferably not less than 110°C, more preferably not less than 120°C, still more preferably not less than 130°C. Therefore, the flow initiation temperature of the resin composition is preferably 110 to 200°C, more preferably 110 to 190°C, still more preferably 110 to 180°C, further preferably 120 to 170°C, still further preferably 120 to 160°C, particularly preferably 130 to 150°C, particularly more preferably 130 to 140°C. The flow initiation temperature of the resin composition can be measured using a flow tester. Specifically, it can be measured by the method described in Examples.

From the viewpoint of the film-forming property and the processability during the production of the elastic sheet, the melt flow rate of the resin composition forming the elastic sheet of the present invention is preferably 5 to 100 g/10 min, more preferably 10 to 90 g/10 min, still more preferably 30 to 80 g/10 min. The melt flow rate can be measured in accordance with JIS K 7210-1: 2014 (190°C, 2.16-kg load).

The elastic sheet of the present invention is a thin sheet having a thickness of not more than 200 μm. From the viewpoint of producing such a thin-layer sheet, the resin composition is required to have a sufficient film-forming property. From the viewpoint of improving the film-forming property, ductility of the resin composition is important. The take-up speed at break, as measured using Capilograph with a die hole diameter of 1.0 mm at a piston extrusion rate of 10 mm/min and a temperature of 170°C, is preferably not less than 35 m/min, more preferably not less than 40 m/min, still more preferably not less than 50 m/min. Details of the method of measuring the take-up speed are as described in Examples.

The method of producing the resin composition forming the elastic sheet of the present invention is not limited as long as it is a method capable of uniformly mixing the copolymer (a), the hydrocarbon softener (b), the styrene-containing oligomer (c), and, when necessary, other components such as the polyolefin-based resin (d), the filler (e), and the antioxidant (f). Examples of the method include a method in which these components are dissolved in a solvent, and then the resulting solution is mixed, followed by drying the solution when necessary, and a method in which these components are melt-kneaded together. From the viewpoint of increasing dispersibility of the constituent components, a melt-kneading method is preferably used. The melt-kneading can be carried out using a melt-kneading apparatus such as a short-axis extruder, a twin-screw extruder, a kneader, a batch mixer, a roller, or a Banbury mixer. The resin composition forming the elastic sheet of the present invention can be preferably obtained by melt-kneading under conditions at 170 to 270°C with a screw rotation speed of 50 to 500 rpm.

[Elastic Sheet]

The elastic sheet of the present invention is a sheet having elasticity, formed from the resin composition described above. The elastic sheet has a thickness of not more than 200 $\mu$m.
The elastic sheet of the present invention has a thickness of not more than 200 $\mu$m. Since the elastic sheet of the present invention is a thin sheet of not more than 200 $\mu$m, it can be easily used in the form in which the sheet is layered on a base material, and moreover, it can achieve both reduced tightness and the elasticity. In addition, since the elastic sheet is formed from the resin composition described above, it can be produced as a very thin sheet of not more than 200 $\mu$m. The thickness of the elastic sheet can be measured, for example, using a thickness gauge. The thickness of the elastic sheet of the present invention is not limited as long as it is not more than 200 $\mu$m, and may be appropriately adjusted depending on the desired thickness. From the viewpoint of achieving both reduced stress at 100% elongation and the fabric adhesion property, the thickness is preferably 50 to 200 $\mu$m, more preferably 60 to 170 $\mu$m, still more preferably 70 to 150 $\mu$m.
The tension at 100% elongation of the elastic sheet is preferably not more than 1.5 N/5 mm. In cases where the tension at 100% elongation is not more than 1.5 N/5 mm, the elastic portion has reduced tightness. Therefore, in cases where, for example, the elastic sheet is used for clothing, the wearer of the clothing may be unlikely to feel discomfort. From the viewpoint of achieving both reduced tightness and the elasticity, the tension at 100% elongation of the elastic sheet of the present invention is more preferably 0.3 N/5 mm to 1.5 N/5 mm, still more preferably 0.4 N/5 mm to 1.2 N/5 mm, further preferably 0.5 N/5 mm to 1.0 N/5 mm.
The tension at 100% elongation of the elastic sheet is a value of the tension determined by cutting the elastic sheet to a width of 5 mm to provide a measurement sample, drawing gauge lines at a predetermined interval (for example, 20 mm) at the center of the measurement sample, and then applying tension to the sheet until the interval between the gauge lines has doubled (to achieve 100% elongation). This value can be measured, for example, by the method described in Examples. In cases where the width of the elastic sheet is less than 5 mm, the result of measurement using this sheet may be converted to obtain a value for which a width of 5 mm is assumed, to determine the tension at 100% elongation of the elastic sheet.
The stress at 100% elongation of the elastic sheet is the tension at 100% elongation per cross-sectional area, and is determined by dividing the tension at 100% elongation measured as described above by the cross-sectional area of the measurement sample. From the viewpoint of reducing the tightness, the stress at 100% elongation of the elastic sheet is preferably 0.33 to 0.76 MPa, more preferably 0.35 to 0.7 MPa, still more preferably 0.40 to 0.65 MPa.
From the viewpoint of easily allowing improvement of the elasticity and suppressing occurrence of sagging due to repeated use, the recovery rate of the length of the elastic sheet of the present invention after repeating 100% elongation three times at room temperature (hereinafter also referred to as "recovery rate A") is preferably not less than 99.0%. In the measurement of the recovery rate A, the sheet is cut into a size of 5 mm (width) × 80 mm (length) to provide a measurement sample, and calculation is performed according to the following equation, wherein $L_\alpha$ represents the gauge length of the sheet before repeating 100% elongation three times at room temperature, and wherein $L_\beta$ represents the gauge length of the elastic sheet after the repeat.

$$\text{Recovery rate A (\%)} = (1 - (L_\beta - L_\alpha) / L_\alpha) \times 100$$

The recovery rate A is more preferably not less than 99.0%, still more preferably not less than 99.5%, further preferably not less than 99.9%.
From the viewpoint of easily allowing improvement of the elasticity and suppressing occurrence of sagging due to repeated use of the elastic sheet of the present invention, the recovery rate of the length of the elastic sheet after holding the elastic sheet in the state of 50% elongation at 35°C for 2 hours (hereinafter also referred to as "recovery rate B") is preferably not less than 84%. In the measurement of the recovery rate B, the sheet is cut into a size of 5 mm (width) × 80 mm (length) to provide a measurement sample, and calculation is performed according to the following equation, wherein

$L_0$ represents the gauge length of the sheet before holding the elastic sheet in the state of 50% elongation at 35°C for 2 hours, and wherein $L_1$ represents the gauge length of the elastic sheet after the holding.

$$\text{Recovery rate B (\%)} = (1 - (L_1 - L_0) / L_0) \times 100$$

The recovery rate B is more preferably not less than 85%, still more preferably not less than 87%, further preferably not less than 89%.

The elastic sheet of the present invention is usually a sheet capable of thermal fusion bonding. The elastic sheet of the present invention may be used in a state where the sheet is bonded to a base material by thermal fusion, or may be used without the bonding by thermal fusion. When the elastic sheet is bonded to the base material by thermal fusion, the thermal fusion bonding temperature is not limited. From the viewpoint of making application to various uses easier, the elastic sheet is preferably capable of thermal fusion bonding at a temperature of preferably not more than 215°C, more preferably not more than 205°C, still more preferably not more than 195°C, further preferably not more than 185°C, still further preferably not more than 175°C, particularly preferably not more than 170°C, particularly more preferably not more than 160°C, extremely preferably not more than 150°C, extremely more preferably not more than 140°C. In the thermal fusion bonding, a melted elastic sheet adheres to the base material to achieve bonding therebetween. Therefore, the thermal fusion bonding is more likely to occur at higher temperature. On the other hand, from the viewpoint of reducing the effect of heat on the base material, and reducing the load on the production facility, the thermal fusion bonding temperature is preferably low. The description that the elastic sheet is capable of thermal fusion bonding at not more than a specific temperature herein does not exclude a sheet capable of thermal fusion bonding at a temperature higher than this temperature. It rather means that the lower limit of the temperature range in which the thermal fusion bonding is possible is not more than the specific temperature. Whether or not an elastic sheet is capable of thermal fusion bonding at a specific temperature is determined as follows. The elastic sheet is layered on a test base material, and the elastic sheet is bonded to the base material using a flat press (for example, a flat-type automatic press HP-54N) at a specific temperature at a pressure of 4.0 N/cm$^2$ for 20 seconds. If bonding of the sheet to the base material is possible without causing detachment, the sheet is determined to be capable of thermal fusion bonding at this temperature. Further, it has been confirmed that the elastic sheet is capable of thermal fusion bonding at a temperature 15°C higher than the flow initiation temperature of the resin composition forming the elastic sheet. Therefore, the lower limit of the temperature at which thermal fusion bonding is possible may be set to the temperature corresponding to the flow initiation temperature of the resin composition + 15°C.

The elastic sheet of the present invention may have any shape as long as its thickness is not more than 200 μm. For example, the elastic sheet may be in the form of a film, tape, or the like having a predetermined size. Further, the elastic sheet may or may not be processed to be porous, when necessary. In one preferred embodiment, the elastic sheet of the present invention is a non-porous sheet.

In one preferred embodiment of the present invention, the elastic sheet of the present invention is an elastic tape, and may be, for example, an elastic tape in the form in which a long tape is wound around a core material. The size of the elastic tape is not limited, and may be appropriately set according to the application for which the elastic tape is used. For example, the width may be preferably 1.0 to 5.0 cm, more preferably 1.5 to 4.5 cm, still more preferably 2.0 to 4.0 cm. The length is preferably 20 to 50 m, more preferably 25 to 45 m, still more preferably 30 to 40 m.

(Method of Producing Elastic Sheet)

The method of producing the elastic sheet is not limited as long as the method enables production of an elastic sheet having a thickness of as low as not more than 200 μm using the resin composition described above. The method may be appropriately selected depending on the shape desired for the sheet. For example, the elastic sheet of the present invention can be produced by molding the resin composition into a sheet with a thickness of not more than 200 μm using a processing machine such as a heat press roll, a hot press machine, an injection molding machine, an insert injection machine, a sheet molding machine, a coextrusion sheet molding machine, an extrusion molding machine, or a calender roll molding machine. In order to obtain a multi-layer sheet, a coextrusion sheet molding machine, an extrusion lamination molding machine, a wet laminator, or the like may also be used. A method in which the resin composition is dissolved in a solvent such as toluene, followed by applying the resulting solution to a heated casting roll or mold release film, and then drying the solution thereon may also be used. Further, the elastic sheet of the present invention may also be produced by producing a sheet with a thickness of more than 200 μm by any of the methods described above, and then subjecting the resulting sheet to an additional step such as a heat-press step or stretching step to adjust the thickness to not more than 200 μm.

The elastic sheet of the present invention may be used as it is as an elastic member, or may be used in a state where the sheet is layered on at least one base material. For example, in the application to clothing or the like, the elastic sheet of the present invention may be used as a tape material for an elastic portion or for an end potion to be tightened, as a reinforcing material for a portion requiring prevention of sagging of the fabric, or as a seam tape for a portion requiring a waterproof property.

[Laminated Body]

The present invention also provides a laminated body in which the elastic sheet of the present invention is layered, for example, on at least one base material. For example, an elastic base material and the elastic sheet of the present invention may be layered on each other, and when necessary, the base material and the elastic sheet may be bonded together by thermal fusion and/or sewn together, to obtain a laminated body in which a base material layer and a resin layer formed from the elastic sheet of the present invention are layered on each other. The present invention also provides a laminated body at least comprising: an elastic base material layer (1); and a resin layer (2) adjacent to the elastic base material layer; wherein the resin layer (2) is a layer formed from the elastic sheet of the present invention.

The elastic base material layer (1) is a layer of an elastic base material, and examples of the base material include knitted or woven fabrics, non-woven fabrics, and synthetic resin films. The laminated body of the present invention is preferably an elastic laminated body.

Examples of the method of producing a laminated body of the present invention include, but are not limited to, a method in which the elastic base material is layered on one or both sides of the elastic sheet of the present invention, and when necessary, heated is applied thereto under pressure, to bond the elastic base material and the elastic sheet together by thermal fusion. Alternatively, the elastic base material may be layered on one or both sides of the elastic sheet of the present invention, and these may be sewn together to produce the laminated body of the present invention.

The elastic sheet and the laminated body described above may be used in members for a variety of uses that may comprise an elastic member. For example, the elastic sheet and the laminated body are particularly useful as materials of clothing, health products, medical products, sporting goods (especially sports clothing), undergarments, and the like.

EXAMPLES

The present invention is described below by way of Examples, but the present invention is not limited in any way by these Examples. First, methods of measuring the physical property values in Examples and Comparative Examples are described below.

[Weight Average Molecular Weight]

The weight average molecular weight was measured by gel permeation chromatography (GPC) measurement under the following measurement conditions. Measurement conditions:

GPC: LC Solution (manufactured by SHIMADZU)
Detector: Differential refractometer RID-10A (manufactured by SHIMADZU)
Column: Two TSKgel G4000Hxl columns in series (manufactured by TOSOH)
Guard column: TSK guard column Hxl-L (manufactured by TOSOH)
Solvent: Tetrahydrofuran
Temperature: 40°C
Flow rate: 1 ml/min
Concentration: 2 mg/ml

[Melt Flow Rate (MFR)]

The MFR of the resin composition was measured in accordance with JIS K 7210-1: 2014 under conditions at 190°C with a load of 2.16 kg. When the resin composition does not flow at 190°C, the measurement is impossible. Therefore, such a case is indicated as "×". Further, a value of not less than 55 is indicated as "○".

[Hardness]

Type-A Durometer Hardness

Three test sheets 1 each having a thickness of 2 mm were conditioned by being left to stand in a room at a temperature of 23°C and a humidity of 50% for 1 day, and these test sheets were stacked together (total, 6 mm). For the stacked sheets, the type-A durometer hardness was determined 3 seconds after the start of measurement in accordance with JIS K6253-3: 2012. A value of not less than 80 was indicated as "hard".

[Ductility (Take-Up Speed at Break)]

As an index of thin-film formability, ductility was evaluated. Ductility is an index of thermoformability, blow moldability, foam moldability, and the like. Improvement of ductility can be regarded as improvement of moldability.

The ductility was measured as follows.

Using a Capilograph 1D PMD-C (Toyo Seiki Co., Ltd.), extrusion was performed at a piston extrusion speed of 10 mm/min, and the take-up speed [m/min] at the time of strand breakage was measured. The die hole diameter was set to 1.0 mm, and the temperature was set to 170°C. Seven times of measurement were carried out, and the resulting median was used as a ductility value.

[Flow Initiation Temperature, and Temperature at Which Fusion Bonding Is Possible]

Measurement was carried out using a flow tester (manufactured by Shimadzu Corporation; trade name: CFT-500D) using a die with a length of 10 mm and a hole diameter of 1.0 mm. After weighing 1.7 g of a resin composition film and placing it in the measuring apparatus, the temperature at which the resin begins to flow under conditions at a load of 15 kgf and a heating rate of 5°C/min was determined as the flow initiation temperature of each sample. The flow initiation temperature obtained by the measurement in this manner +15°C was regarded as the temperature at which fusion bonding is possible.

[Tension at 100% Elongation, and Stress at 100% Elongation]

The tension at 100% elongation, and the stress at 100% elongation were measured using a tensile tester (Autograph Tensile Tester (AGX-V), manufactured by Shimadzu Corporation).

A strip test piece of 5 mm (width) × 80 mm (length) was prepared, and gauge lines were provided at a 20-mm interval at the center. One end of the test piece was fixed with a fixed jig (chuck), and the other end was fixed with a movable jig (chuck). The test piece was then extended at a speed of 300 mm/min until the gauge length reached 40 mm (100% elongation), and the measured value at this time was determined as the value (N) of tension at 100% elongation of each sample. The tension at 100% elongation per cross-sectional area was also calculated to determine the stress at 100% elongation (MPa).

[Recovery Rate of Length of Elastic Tape after Repeating 100% Elongation Three Times at Room Temperature (Recovery Rate A)]

A cycle test at 100% elongation was carried out using a tensile tester (Autograph Tensile Tester (AGX-V), manufactured by Shimadzu Corporation).

A strip test piece of 5 mm (width) × 80 mm (length) was prepared, and gauge lines were provided at a 20-mm interval at the center. One end of the test piece was fixed with a fixed jig (chuck), and the other end was fixed with a movable jig (chuck). The test piece was then extended at a speed of 300 mm/min until the gauge length reached 40 mm (100% elongation), and thereafter, the chucks were returned to the initial position at a speed of 300 mm/min. This operation was repeated three times. The test piece was removed from the apparatus, and the length between the gauge lines after the three cycles of elongation test was measured. From the obtained result, the recovery rate of the length of the elastic tape after repeating 100% elongation three times at room temperature (recovery rate A) was calculated according to the following equation.

$$\text{Recovery rate A (\%)} = (1 - (L_\beta - L_\alpha) / L_\alpha) \times 100$$

$L_\alpha$: initial gauge length (20 mm)
$L_\beta$: Gauge length (mm) after three cycles of elongation test

[Recovery Rate of Length of Elastic Tape after Holding Elastic Tape in State of 50% Elongation at 35°C for 2 Hours (Recovery Rate B)]

A strip test piece of 5 mm (width) × 80 mm (length) was prepared, and gauge lines were provided at a 20-mm interval at the center.

One end of the test piece was fixed with a fixed jig (chuck), and the other end was fixed with a movable jig (chuck). The test piece was then extended to 50% elongation (gauge length, 30 mm), and then fixed. The test piece was left to stand in an oven at 35°C for 2 hours, and then the extension stress was released. The test piece was allowed to cool at a room temperature of 25°C for 10 min, and then subjected to measurement of the length between the gauge lines. From the obtained result, the recovery rate of the length of the elastic tape after holding the elastic tape in the state of 50% elongation at 35°C for 2 hours (recovery rate B) was calculated according to the following equation.

$$\text{Recovery rate B (\%)} = (1 - (L_1 - L_0) / L_0) \times 100$$

$L_0$: initial gauge length (20 mm)
$L_1$: Gauge length (mm) after holding at 35°C for 2 hours

[Thickness]

The micrometer-method thickness was measured according to 7.4.1.1 of JIS C2330 (2001).

[Example 1]

Using a twin-screw extruder, 70 parts by mass of copolymer (a1) (SEPTON 4033, manufactured by Kuraray; styrene content: 30% by mass; Mw: 92,000; hardness: 76A) and 30 parts by mass of copolymer (a2) ("SEPTON 2002", manufactured by Kuraray; styrene content: 30% by mass; Mw: 54,000; MFR: 70 g/10 min; hardness: 80A) were kneaded together with 80 parts by mass of hydrocarbon softener (b1) (PW-100G, manufactured by Idemitsu; paraffin oil), 10 parts by mass of styrene-containing oligomer (c1) (FTR2140, manufactured by Mitsui Chemicals, Inc.; α-methylstyrene-styrene copolymer; weight average molecular weight: 3230), and 7 parts by mass of polyolefin-based resin (d1) (Evolue SP1071C, manufactured by Prime Polymer Co., Ltd.; C6-LLDPE; MFR: 10 g/10 min (230°C, 2.16-kg load); melting point: 112°C; metallocene catalyst) at 200°C, to obtain resin composition 1.

The resin composition 1 was fed into an extrusion lamination molding machine (T-die-type single-layer extrusion lamination film-forming machine; hole diameter: 40 mm; L/D=24). The resin composition 1 was extruded at an extrusion temperature of 200°C, to obtain an elastic sheet 1 with a thickness of 75 μm.

[Example 2]

Resin composition 1 obtained in the same manner as in Example 1 was fed into an extrusion lamination molding machine (T-die-type single-layer extrusion lamination film-forming machine; hole diameter: 40 mm; L/D=24). The resin composition 1 was extruded at an extrusion temperature of 200°C, to obtain an elastic sheet 2 with a thickness of 150 μm.

[Example 3]

An elastic sheet 3 with a thickness of 75 μm was obtained in the same manner as in Example 1 except that hydrocarbon softener (b2) (PW-380, manufactured by Idemitsu; paraffin-based-oil-hydrogenated high-viscosity oil) was used instead of hydrocarbon softener (b1) (PW-100G, manufactured by Idemitsu; paraffin oil).

[Example 4]

An elastic sheet 4 with a thickness of 75 μm was obtained in the same manner as in Example 1 except that styrene-containing oligomer (c2) (Kristalex 5140, manufactured by EASTMAN; weight average molecular weight, 4900) was used instead of styrene-containing oligomer (c1) (FTR2140, manufactured by Mitsui Chemicals, Inc.; α-methylstyrene-styrene copolymer).

[Example 5]

An elastic sheet 5 with a thickness of 75 μm was obtained in the same manner as in Example 1 except that copolymer (a3) (TAIPOL6150, manufactured by TSRC; styrene content: 29% by mass; Mw: 90,000; hardness: 76A) was used instead of copolymer (a1) (SEPTON 4033, manufactured by Kuraray; styrene content: 30% by mass; Mw: 92,000; hardness: 76A).

[Example 6]

An elastic sheet 6 with a thickness of 75 μm was obtained in the same manner as in Example 5 except that copolymer (a4) (TAIPOL6152, manufactured by TSRC; styrene content: 29% by mass; Mw: 55,000; hardness: 76A) was used instead of copolymer (a2) (SEPTON 2002, manufactured by Kuraray; styrene content: 30% by mass; Mw: 54,000; MFR: 70 g/10 min; hardness: 80A).

[Example 7]

An elastic sheet 7 with a thickness of 75 μm was obtained in the same manner as in Example 1 except that polyolefin-based resin (d2) (Neo-Zex 2015M, manufactured by Prime Polymer Co., Ltd.; solution-method C4-LLDPE; MFR:1.2 g/10 min (230°C, 2.16-kg load); melting point: 121°C) was used instead of polyolefin-based resin (d1) (Evolue SP1071C, manufactured by Prime Polymer Co., Ltd.; C6-LLDPE; MFR: 10 g/10 min (230°C, 2.16-kg load); melting point: 112°C).

[Examples 8 to 20]

Elastic sheets 8 to 20 with a thickness of 75 μm were obtained in the same manner as in Example 1 except that compositions of the components shown in Tables 1 and 2 were used.

[Example 21]

An elastic sheet 21 with a thickness of 75 μm was obtained in the same manner as in Example 1 except that copolymer (a1') (SEPTON 4044, manufactured by Kuraray; styrene content: 30% by mass; Mw: 92,000; hardness: 76A) was used instead of the copolymer (a1) in Example 11 (SEPTON 4033, manufactured by Kuraray; styrene content: 30% by mass; Mw: 92,000; hardness: 76A).

[Comparative Examples 1 to 3]

Elastic sheets were obtained in the same manner as in Example 1 except that compositions of the components shown in Table 2 were used. Copolymer (a5) was "SEPTON 4055", manufactured by Kuraray (styrene content: 30% by mass; Mw: 298,000). The hardness was not measurable.

[Comparative Example 4]

A resin composition was obtained in the same manner except that a composition of the components shown in Table 2 was used. The obtained resin composition was fed into an extrusion lamination molding machine (T-die-type single-layer extrusion lamination film-forming machine; hole diameter: 40 mm; L/D=24), and extruded at an extrusion temperature of 200°C, to form a sheet with a thickness of 200 μm. To one side of the obtained sheet, a water-resistant, baseless, double-sided adhesive sheet (HJ-9150W, manufactured by Nitto Denko), having release paper attached to one side thereof, was attached. Subsequently, the resulting sheet was processed using a carbon dioxide laser processing machine (Model EFL1300) manufactured by ELS Engineering Co., Ltd., to obtain a mesh film with a diameter of 1 mm.

[Comparative Examples 5 to 8]

Elastic sheets were obtained in the same manner as in Example 11 except that the compositions of the components shown in Table 2 were used.

[Table 1]

|  | Examples | | | | | | | | | |
|---|---|---|---|---|---|---|---|---|---|---|
|  | 1 | 2 | 3 | 4 | 5 | 6 | 7 | 8 | 9 | 10 |
| Copolymer (a1) | 70 | 70 | 70 | 70 |  |  | 70 | 70 | 100 | 60 |
| Copolymer (a2) | 30 | 30 | 30 | 30 | 30 |  | 30 | 30 |  | 40 |
| Copolymer (a3) |  |  |  |  | 70 | 70 |  |  |  |  |
| Copolymer (a4) |  |  |  |  |  | 30 |  |  |  |  |
| Copolymer (a5) |  |  |  |  |  |  |  |  |  |  |
| Hydrocarbon softener (b1) | 80 | 80 |  | 80 | 80 | 80 | 80 | 90 | 80 | 77 |
| Hydrocarbon softener (b2) |  |  | 80 |  |  |  |  |  |  |  |

(continued)

| | Examples | | | | | | | | | |
|---|---|---|---|---|---|---|---|---|---|---|
| | 1 | 2 | 3 | 4 | 5 | 6 | 7 | 8 | 9 | 10 |
| Styrene-containing oligomer (c1) | 10 | 10 | 10 | | 10 | 10 | 10 | 10 | 10 | 10 |
| Styrene-containing oligomer (c2) | | | | 10 | | | | | | |
| Polyolefin-based resin (d1) | 7 | 7 | 7 | 7 | 7 | 7 | | 7 | 7 | 7 |
| Polyolefin-based resin (d2) | | | | | | | 7 | | | |
| Total | 197 | 197 | 197 | 197 | 197 | 197 | 197 | 207 | 197 | 194 |
| Content of (a) [%] | 51 | 51 | 51 | 51 | 51 | 51 | 51 | 48 | 51 | 52 |
| Content of (a)+(b)+(c) [%] | 96 | 96 | 96 | 96 | 96 | 96 | 96 | 97 | 96 | 96 |
| Hardness [A] | 40 | 40 | 41 | 40 | 40 | 37 | 40 | 33 | 37 | 43 |
| MFR [g/10 min] | 51 | - | - | - | - | - | - | 35 | 15 | 35 |
| Flow initiation temperature [°C] | 130 | 130 | 140 | 130 | 130 | 130 | 140 | 125 | 145 | 130 |
| Fusion bonding temperature [°C] | 145 | 145 | 155 | 145 | 145 | 145 | 155 | 140 | 160 | 145 |
| Thickness (μm) | 75 | 150 | 75 | 75 | 75 | 75 | 75 | 75 | 75 | 75 |
| Tension at 100% elongation [N/5 mm] | 0.38 | 0.76 | 0.45 | 0.40 | 0.40 | 0.33 | 0.36 | 0.28 | 0.31 | 0.45 |
| Stress at 100% elongation [Mpa] | 1.0 | 1.0 | 1.2 | 1.1 | 1.1 | 0.9 | 1.0 | 0.7 | 0.8 | 1.2 |
| Recovery rate A [%] | 99.7 | 99.9 | 99.9 | 99.9 | 99.8 | 99.6 | 99.8 | 99.7 | 99.9 | 99.4 |
| Recovery rate B [%] | 89 | 89 | 89 | 89 | 89 | 87 | 88 | 89 | 88 | 87 |
| Ductility [m/min] | 43 | 43 | 37 | 45 | 40 | 40 | 38 | 45 | 35 | 50 |

[Table 2]

| | Examples | | | | | | | | | | Comparative Examples | | | | | | | |
|---|---|---|---|---|---|---|---|---|---|---|---|---|---|---|---|---|---|---|
| | 11 | 12 | 13 | 15 | 16 | 17 | 18 | 19 | 20 | 21 | 1 | 2 | 3 | 4 | 5 | 6 | 7 | 8 |
| Copolymer (a1) | 70 | 70 | 70 | 70 | 70 | 70 | 70 | 90 | 50 | | | 90 | | 70 | 70 | 70 | 70 | 70 |
| Copolymer (al') | | | | | | | | | | 70 | | | | | | | | |
| Copolymer (a2) | 30 | 30 | 30 | 30 | 30 | 30 | 30 | 10 | 50 | 30 | 100 | | | 30 | 30 | 30 | 30 | 30 |
| Copolymer (a3) | | | | | | | | | | | | | | | | | | |
| Copolymer (a4) | | | | | | | | | | | | | 100 | | | | | |
| Copolymer (a5) | | | | | | | | | | | | 10 | | | | | | |
| Hydrocarbon softener (b1) | 80 | 80 | 50 | 200 | 90 | 90 | 80 | 80 | 80 | 80 | | 80 | | 80 | 20 | 300 | 90 | 90 |
| Hydrocarbon softener (b2) | | | | | | | | | | | | | | | | | | |
| Styrene-containing oligomer (c1) | 10 | 10 | 10 | 10 | 5 | 18 | 10 | 10 | 10 | 10 | | | 3 | | 10 | 10 | 2 | 30 |
| Styrene-containing oligomer (c2) | | | | | | | | | | | | | | | | | | |
| Polyolefin-based resin (d1) | 10 | 5 | 7 | 7 | 7 | 7 | 0 | 10 | 10 | 10 | 20 | 40 | | | 7 | 7 | 7 | 7 |
| Polyolefin-based resin (d2) | | | | | | | | | | | | | | | | | | |
| Total | 200 | 195 | 167 | 317 | 202 | 215 | 190 | 200 | 200 | 200 | 120 | 220 | 103 | 180 | 137 | 417 | 199 | 227 |
| Content of (a) [%] | 50 | 51 | 60 | 32 | 50 | 47 | 53 | 50 | 50 | 50 | 83 | 41 | 97 | 56 | 73 | 24 | 50 | 44 |
| Content of (a)+(b)+(c) [26] | 95 | 97 | 96 | 98 | 97 | 97 | 100 | 95 | 95 | 95 | 83 | 82 | 100 | 100 | 95 | 98 | 96 | 97 |
| Hardness [A] | 45 | 38 | 45 | 30 | 35 | 47 | 34 | 40 | 47 | 44 | 67 | Hard | Hard | 40 | 50 | 25 | 33 | 60 |
| MFR [g/10 min] | 50 | 50 | - | - | - | - | 48 | 33 | 62 | 30 | - | × | × | ○ | 20 | 100 | 45 | 20 |
| Flow initiation temperature [°C] | 130 | 130 | 150 | 125 | 130 | 130 | 140 | 135 | 130 | 150 | >200 | 180 | >200 | 155 | 155 | 120 | 130 | 145 |
| Fusion bonding temperature [°C] | 145 | 145 | 165 | 140 | 145 | 145 | 155 | 150 | 145 | 165 | >200 | 195 | >200 | 170 | 170 | 145 | 145 | 160 |
| Thickness ($\mu$m) | 75 | 75 | 75 | 75 | 75 | 75 | 75 | 75 | 75 | 75 | 75 | 75 | 75 | 200 | 100 | 75 | 75 | 100 |
| Tension at 100% elongation [N/5 mm] | 0.55 | 0.25 | 0.75 | 0.20 | 0.42 | 0.64 | 0.20 | 0.33 | 0.75 | 0.81 | 1.7 | 1.5 | 2.0 | 0.65 | 1.3 | 0.1 | 0.4 | 1.6 |
| Stress at 100% elongation [Mpa] | 1.5 | 0.7 | 2.0 | 0.5 | 1.1 | 1.7 | 0.5 | 0.9 | 2.0 | 1.6 | 4.5 | 4.0 | 5.3 | - | 2.3 | 0.3 | 1.0 | 4.2 |
| Recovery rate A [%] | 99.5 | 99.9 | 99.8 | 99.6 | 99.6 | 99.8 | 99.9 | 99.9 | 99.6 | 99.6 | 98.5 | 98.5 | 99.6 | 99.8 | 99.8 | 99.9 | 99.9 | 99.7 |
| Recovery rate B [%] | 87 | 89 | 88 | 88 | 87 | 88 | 87 | 89 | 86 | 90 | 85 | 83 | 85 | 79 | 85 | 83 | 85 | 83 |
| Ductility [m/min] | 66 | 35 | 40 | 37 | 48 | 50 | 30 | 40 | 70 | 30 | 50 | 60 | 25 | 20 | 25 | 80 | 45 | 25 |

16

For the resin compositions obtained in Examples and Comparative Examples, the hardness, the melt flow rate, the flow initiation temperature, the temperature at which fusion bonding is possible, and the take-up speed at break were measured according to the methods described above.

The thickness, the tension at 100% elongation, the stress at 100% elongation, the recovery rate A, and the recovery rate B of the elastic sheets obtained in the Examples and Comparative Examples were measured according to the methods described above. The results obtained are shown in Tables 1 and 2.

[Clothing Pressure]

Each of the films of Example 1 and Comparative Example 2, with a thickness of 75 $\mu$m, was cut into a piece of 1.2 cm $\times$ 80 cm, and fabrics composed by jersey knit (weight per unit area, 140 g/m$^2$; composition ratio: polyester/polyurethane=83/17) were bonded to both sides of the piece by thermal fusion (160°C (temperature) $\times$ 0.1 MPa (pressure) $\times$ 20 seconds (time)). Thereafter, both end portions were sewn to prepare a band of 1.2 cm (width) $\times$ 75 cm (circumference).

For measurement of a surrogate property for wearing comfort, the prepared band was put on the abdominal part of a mannequin with a waist size of 80 cm using a clothing pressure tester (manufactured by AMI Techno Co., Ltd.; model number: AMI3037-10) under an environment at a room temperature of 25°C and a relative humidity of 50%. An air pack was sandwiched between the mannequin and the band, and air (about 0.3 cm$^3$) was fed into the air pack. The result of measurement of the pressure at this time is shown in Table 3.

[Table 3]

|  | Example 1 | Comparative Example 2 |
|---|---|---|
| Clothing pressure (kPa) | 0.2 | 0.6 |

Although the elastic sheets described in Examples 1 to 21 had low tension at 100% elongation, the recovery rate of the length of each elastic sheet after repeating 100% elongation three times at room temperature (recovery rate A) was high. Clothing using such an elastic sheet has sufficient elasticity while exerting low stress. Therefore, it generates less tightness as shown in Table 3. Further, for each of the elastic sheets described in Examples 1 to 21, the recovery rate of the length of the elastic sheet after holding it in the state of 50% elongation at 35°C for 2 hours (recovery rate B) was also high. Therefore, clothing using such an elastic sheet is highly resistant to repeated stretching and contraction, and is less likely to suffer from sagging. In contrast, the elastic sheets of Comparative Examples 1 to 3, Comparative Example 5, and Comparative Example 8 give a tightening sensation when they are used for clothing, as shown in Table 3. Further, since the elastic sheets of Comparative Examples 1 to 8 have low recovery rates B, they are likely to suffer from sagging. In Comparative Examples 4 and 5, and Comparative Example 8, poor ductility prevented production of a sheet with a thickness of less than 100 $\mu$m.

**Claims**

1. An elastic sheet formed with a resin composition comprising:

   a copolymer (a) that is a block copolymer comprising: a polymer block A mainly comprising a vinyl aromatic compound; and a polymer block B mainly comprising a conjugated diene compound; or that is a hydrogenated product of the block copolymer; and
   with respect to 100 parts by mass of the copolymer (a),
   50 to 200 parts by mass of a hydrocarbon softener (b); and
   5 to 20 parts by mass of a styrene-containing oligomer (c),
   the elastic sheet having a thickness of not more than 200 $\mu$m.

2. The elastic sheet according to claim 1, whose tension at 100% elongation is not more than 1.5 N/5 mm.

3. The elastic sheet according to claim 1 or 2, wherein the total amount of the copolymer (a), the hydrocarbon softener (b), and the styrene-containing oligomer (c) is not less than 85% by mass with respect to the total amount of the resin composition.

4. The elastic sheet according to any one of claims 1 to 3, wherein the flow initiation temperature of the resin composition is not more than 200°C.

5. The elastic sheet according to any one of claims 1 to 4, capable of thermal fusion bonding at a temperature of not more than 170°C.

6. The elastic sheet according to any one of claims 1 to 5, wherein the weight average molecular weight of the copolymer (a) is 50,000 to 140,000.

7. The elastic sheet according to any of claims 1 to 6, wherein the copolymer (a) comprises a constituent unit derived from a styrene-based monomer, and wherein the amount of the constituent unit derived from the styrene-based monomer is not less than 15% by mass with respect to the total amount of constituting units of the copolymer (a).

8. The elastic sheet according to any one of claims 1 to 7, wherein the weight average molecular weight of the styrene-containing oligomer (c) is 1,000 to 6,000.

9. The elastic sheet according to any one of claims 1 to 8, wherein the resin composition further comprises 1 to 50 parts by mass of a polyolefin-based resin (d) with respect to 100 parts by mass of the copolymer (a).

10. The elastic sheet according to claim 9, wherein the polyolefin-based resin (d) has a melt flow rate of 0.1 to 100 g/10 min.

11. The elastic sheet according to claim 9 or 10, wherein the polyolefin-based resin (d) is a copolymer of ethylene and at least one $C_3$-$C_{12}$ $\alpha$-olefin.

12. The elastic sheet according to any one of claims 1 to 11, wherein the resin composition comprises an acrylic block copolymer in an amount of not less than 0 parts by mass and less than 20 parts by mass with respect to 100 parts by mass of the copolymer (a).

13. The elastic sheet according to any one of claims 1 to 12, wherein the recovery rate of the length of the elastic sheet after repeating 100% elongation three times at room temperature is not less than 99.0%.

14. The elastic sheet according to any one of claims 1 to 13, wherein the recovery rate of the length of the elastic sheet after holding the elastic sheet in a state of 50% elongation at 35°C for 2 hours is not less than 87.0%.

15. The elastic sheet according to any one of claims 1 to 14, which is an elastic tape.

16. A laminated body at least comprising: an elastic base material layer (1); and a resin layer (2) adjacent to the elastic base material layer; wherein the resin layer (2) is a layer formed from the elastic sheet according to any one of claims 1 to 15.

17. The laminated body according to claim 16, wherein the elastic base material layer (1) is adjacent to both sides of the resin layer (2).

## INTERNATIONAL SEARCH REPORT

| International application No. |
|---|
| **PCT/JP2024/021354** |

**A. CLASSIFICATION OF SUBJECT MATTER**

***C08J 5/18***(2006.01)i; ***B32B 5/04***(2006.01)i; ***B32B 25/14***(2006.01)i; ***C08L 23/00***(2006.01)i; ***C08L 25/02***(2006.01)i; ***C08L 53/02***(2006.01)i; ***C08L 91/00***(2006.01)i
FI:   C08J5/18; B32B5/04; B32B25/14; C08L23/00; C08L25/02; C08L53/02; C08L91/00

According to International Patent Classification (IPC) or to both national classification and IPC

**B. FIELDS SEARCHED**

Minimum documentation searched (classification system followed by classification symbols)

C08J5/18; B32B1/00-43/00; C08L23/00; C08L25/02; C08L53/02; C08L91/00; C09J153/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2019/235454 A1 (SEKISUI FULLER COMPANY, LTD.) 12 December 2019 (2019-12-12) claims, paragraphs [0042], [0056], [0059]-[0061], [0091]-[0094], [0097]-[0099], examples 1, 2 | 1-8, 12, 15-17 |
| A | | 9-11, 13-14 |
| X | JP 2018-70704 A (HENKEL JAPAN LTD.) 10 May 2018 (2018-05-10) claims, paragraphs [0093]-[0094], [0102]-[0111], comparative example 3 | 1, 4-5, 7-8, 12, 16 |
| A | JP 2021-46540 A (SEKISUI FULLER COMPANY, LTD.) 25 March 2021 (2021-03-25) claims, paragraphs [0009], [0021]-[0022], [0027], [0031], [0034]-[0043], [0057]-[0062], examples 5-7 | 1-17 |
| A | JP 2017-8308 A (KURARAY CO., LTD.) 12 January 2017 (2017-01-12) claims, paragraphs [0045]-[0047], [0058]-[0060] | 1-17 |

| ✓ Further documents are listed in the continuation of Box C. | ✓ See patent family annex. |
|---|---|

| * Special categories of cited documents: |
|---|
| "A" document defining the general state of the art which is not considered to be of particular relevance |
| "D" document cited by the applicant in the international application |
| "E" earlier application or patent but published on or after the international filing date |
| "L" document which may throw doubts on priority claim(s) or which is cited to establish the publication date of another citation or other special reason (as specified) |
| "O" document referring to an oral disclosure, use, exhibition or other means |
| "P" document published prior to the international filing date but later than the priority date claimed |

| "T" later document published after the international filing date or priority date and not in conflict with the application but cited to understand the principle or theory underlying the invention |
|---|
| "X" document of particular relevance; the claimed invention cannot be considered novel or cannot be considered to involve an inventive step when the document is taken alone |
| "Y" document of particular relevance; the claimed invention cannot be considered to involve an inventive step when the document is combined with one or more other such documents, such combination being obvious to a person skilled in the art |
| "&" document member of the same patent family |

| Date of the actual completion of the international search | Date of mailing of the international search report |
|---|---|
| **22 August 2024** | **03 September 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

| International application No. |
|---|
| **PCT/JP2024/021354** |

| C. | DOCUMENTS CONSIDERED TO BE RELEVANT | |
|---|---|---|
| Category* | Citation of document, with indication, where appropriate, of the relevant passages | Relevant to claim No. |
| A | JP 8-59903 A (MITSUBISHI CHEMICAL CORPORATION) 05 March 1996 (1996-03-05) claims, paragraph [0004] | 1-17 |
| A | JP 10-88097 A (NIPPON ENU ESU SHII KK) 07 April 1998 (1998-04-07) claims, paragraph [0003] | 1-17 |

Form PCT/ISA/210 (second sheet) (July 2022)

**INTERNATIONAL SEARCH REPORT**
Information on patent family members

| Patent document cited in search report | | | Publication date (day/month/year) | Patent family member(s) | | | Publication date (day/month/year) |
|---|---|---|---|---|---|---|---|
| WO | 2019/235454 | A1 | 12 December 2019 | CN | 112236496 | A | |
| JP | 2018-70704 | A | 10 May 2018 | US | 2019/0249045 | A1 | |
| | | | | claims, paragraphs [0099]-[0100], [0107]-[0128], comparative example 3 | | | |
| | | | | WO | 2018/079220 | A1 | |
| | | | | EP | 3532558 | A1 | |
| | | | | TW | 201829703 | A | |
| | | | | CN | 109890928 | A | |
| | | | | KR | 10-2019-0072609 | A | |
| JP | 2021-46540 | A | 25 March 2021 | (Family: none) | | | |
| JP | 2017-8308 | A | 12 January 2017 | US | 2020/0079890 | A1 | |
| | | | | claims, paragraphs [0208]-[0211], [0226]-[0233] | | | |
| | | | | US | 2018/0030194 | A1 | |
| | | | | WO | 2016/125899 | A1 | |
| | | | | EP | 3255073 | A1 | |
| | | | | TW | 201634506 | A | |
| | | | | CN | 107207685 | A | |
| | | | | KR | 10-2017-0115538 | A | |
| JP | 8-59903 | A | 05 March 1996 | (Family: none) | | | |
| JP | 10-88097 | A | 07 April 1998 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002363376 A
- JP 2006089546 A

- JP 6931363 B